(19)

Europäisches
Patentamt

European
Patent Office

Office européen
des brevets

(11)     **EP 2 115 359 B1**

(12)                      **EUROPEAN PATENT SPECIFICATION**

(45) Date of publication and mention
of the grant of the patent:
**12.04.2017  Bulletin 2017/15**

(51) Int Cl.:
*F23N 1/00* (2006.01)          *F23K 5/00* (2006.01)
*F02C 9/28* (2006.01)          *F02C 9/40* (2006.01)

(21) Application number: **07706206.5**

(86) International application number:
**PCT/IT2007/000006**

(22) Date of filing: **04.01.2007**

(87) International publication number:
**WO 2008/081488 (10.07.2008 Gazette 2008/28)**

(54) **METHOD FOR CONTROLLING THE SUPPLY OF FUEL GAS TO A GAS-TURBINE BURNER**

VERFAHREN ZUR STEUERUNG DER ZUFUHR VON BRENNGAS ZU EINEM
GASTURBINENBRENNER

PROCÉDÉ DE RÉGULATION DE L'ALIMENTATION D'UN BRÛLEUR DE TURBINE À GAZ EN
CARBURANT GAZEUX

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**11.11.2009  Bulletin 2009/46**

(73) Proprietor: **ANSALDO ENERGIA S.P.A.**
**16152 Genova (IT)**

(72) Inventors:
• **GOBBO, Paolo**
**17011 Albisola Superiore (IT)**

• **BONZANI, Federico**
**16156 Genova (IT)**
• **PIANA, Gian Franco**
**15076 Ovada (IT)**

(74) Representative: **Lovino, Paolo et al**
**Studio Torta S.p.A.**
**Via Viotti, 9**
**10121 Torino (IT)**

(56) References cited:
**JP-A- 1 047 434          JP-A- 7 004 267**
**JP-A- 9 317 499          JP-A- 2006 077 698**
**US-A1- 2005 126 178**

EP 2 115 359 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

TECHNICAL FIELD

The present invention relates to a method for controlling the supply of fuel gas to a gas-turbine burner.

BACKGROUND ART

As is known, combined-cycle power stations produce electrical energy and steam in co-generation. Some combined-cycle power stations use IGCC (Integrated Gasification Combined Cycle) technology; i.e., they have a gasification plant for producing a gas with low calorific value, referred to generally as "synthesis gas" or "syngas", deriving from processes of gasification of biomasses, residues of refinery processes (asphalts, heavy oils), or coal. Syngas is used as fuel gas in the burner of the gas turbine as an alternative to natural gas, after being filtered and possibly diluted with steam and/or with inert gases (such as, for example, nitrogen and carbon dioxide) that tend to reduce the emission of nitrogen oxides in the burnt gases produced in the burner.
In certain applications, there is felt the need to produce both syngas and pure hydrogen in the gasification plant. For example, hydrogen can be used for producing energy via fuel cells or else for desulphurizing crude oil by means of a process referred to as "hydrocracking".
In particular, hydrogen can be extracted from the syngas in quantities that vary according to the requirement of an operator, via a series of membranes traversed directly by the flow of syngas.
It follows that the composition and hence the calorific value of the syngas that exits from the membrane and enters the burner of the gas turbine are variable in time as a function of the amount of hydrogen that has been extracted previously. By way of example, the percentage of the hydrogen contained in the syngas can range from approximately 30vol% to 50vol%.
Since the burner receives a fuel gas having a variable calorific value, the gas turbine is unable to supply the power requirement in a constant way. Furthermore, the combustion can be unstable so that the gas turbine has some difficulty in operation during the transients, sometimes stops, and cannot be brought to operate at its maximum power.
To obtain the power requirement in a constant way from the gas turbine, the patent No. EP0055852 teaches controlling combustion by detecting a global level of energy of the syngas reaching the burner, and adding a fuel with high calorific value in the burner in parallel with the flow of syngas in the case where the level of energy of the syngas is insufficient to maintain the burner lit with a stable combustion.
JP2006077698 corresponds to the preamble of claim 1 and discloses a mixing and adjusting device for mixing low-calorie gas with reformed gas, supplied by a reforming gas manufacturing device. The mixed gas is supplied to a gas turbine equipment as fuel gas.
There is felt the need to regulate the flowrate of syngas and possibly regulate an additional flowrate of natural gas even in the absence of signals of the load or thermal power that can be generated via the syngas coming from the gasification plant.
In particular, there is felt the need to obtain the maximum power from the gas turbine using the entire flowrate of syngas available from the gasification plant, preventing negative repercussions on operation of the gasification plant itself and, at the same time, modulating the electric power produced by the combined-cycle power station.

DISCLOSURE OF INVENTION

The aim of the present invention is to provide a method for controlling the supply of fuel gas to a gas-turbine burner that will enable the needs set forth above to be achieved in a simple and inexpensive way.
According to the present invention, a method is provided for controlling supply of fuel gas to a gas-turbine burner, as defined in claim 1.

BRIEF DESCRIPTION OF THE DRAWINGS

For a better understanding of the present invention, a preferred embodiment is now described, purely by way of non-limiting example, with reference to the attached plate of drawings, wherein:

-    Figure 1 is a schematic illustration of a plant for supplying fuel gas to a gas-turbine burner controlled according to the teachings of the present invention; and
-    Figures 2 to 4 are diagrams corresponding to regulators used for implementing the method for controlling the plant of Figure 1.

BEST MODE FOR CARRYING OUT THE INVENTION

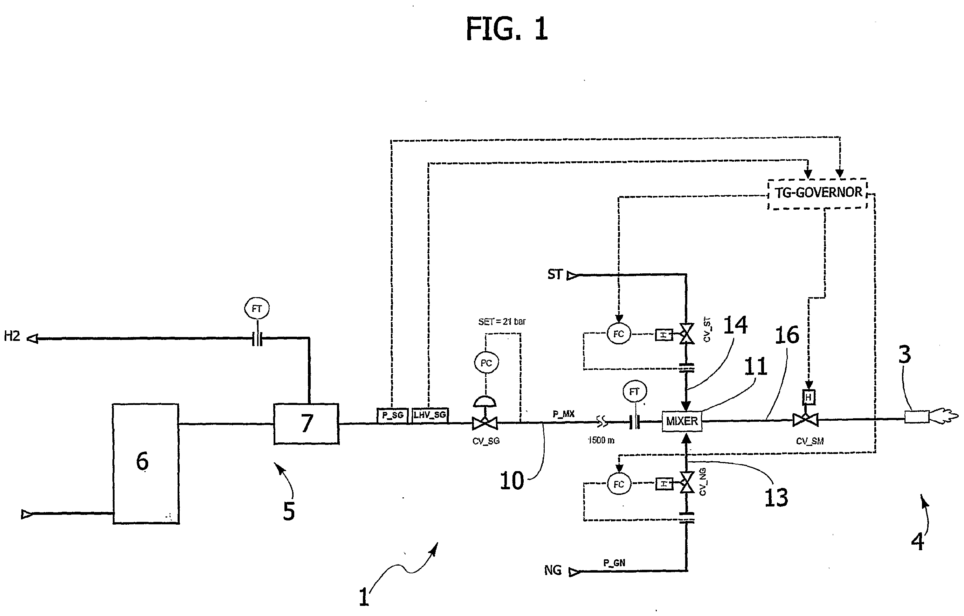

In Figure 1, designated as a whole by 1 is a plant (illustrated partially and schematically) for supplying a gas SG with low calorific value, namely, a synthesis gas (or syngas), to a burner 3 of a gas turbine (not illustrated).

The gas turbine forms part of a combined-cycle power station 4 for the production of electrical energy and of steam in co-generation of the IGCC type, i.e., of the type comprising a gasification plant 5, in which one or more gasification units 6 produce synthesis gas via processes of gasification of biomasses, residue of refinery processes (asphalts, heavy oils), or coal.

The plant 5 comprises a device 7 for extraction of hydrogen, of a known type and not described in detail, which is set downstream of the unit 6 and extracts a variable quantity of hydrogen from the syngas produced by the unit 6 in response to a requirement of an operator. Consequently, the gas SG that exits from the device 7 and that is available at the inlet of the plant 1 has characteristics of composition, calorific value and flowrate that vary in time.

The gas SG enters a valve CV_SG, which regulates the pressure p_MX at its own outlet so as to maintain the pressure p_MX below a pre-set value SET (equal for example to 21 bar), which is lower than the delivery pressure p_SG of the plant 5, i.e., the pressure at inlet to the valve CV_SG.

Upstream of the valve CV_SG, the pressure p_SG and the lower heating value SGLHV (or else the composition) of the gas SG are detected via sensor devices of a known type (not illustrated). The signals indicating the pressure p_SG and the heating value SGLHV are sent to a control system, designated by the TG_GOVERNOR in Figure 1.

Upstream of the valve CV_SG, the gas SG can be discharged via a further valve towards a flare (not illustrated), in the case where it were not used by the plant 1 and, hence, the pressure p_SG were to rise beyond a pre-set limit.

The gas SG coming from the valve CV_SG is sent by a line 10 to a mixer 11 defined by a chamber, in which it is possible to mix the gas SG with a flow of gas NG with high calorific value (in particular, constituted by natural gas) and/or with a flow of steam ST.

The flowrate of gas NG and of steam ST are regulated by respective valves CV_NG and CV_ST, which are governed by the system TG_GOVERNOR and are set along respective distinct supply lines 13, 14. In particular, the steam ST is added to reduce the emissions of nitrogen oxides in the burnt gases. There is thus formed a mixture SM, which is sent to the combustion chamber of the burner 3 through a line 16. The flowrate of the mixture SM is regulated by a valve CV_SM set along the line 16 and governed by the system TG_GOVERNOR to obtain the electric power requirement.

The system TG_GOVERNOR, in addition to the signals for the pressure p_SG and heating value SGLHV, acquires also the signals for the flowrate of gas SG, the flowrate of gas NG, and the flowrate of steam ST at input to the mixer 11. Preferably, the system TG_GOVERNOR also acquires the lower heating value NGLHV (or else the composition) of the gas NG; alternatively, the heating value NGLHV could be pre-set and stored in a memory of the system TG_GOVERNOR.

In said memory, also the following parameters are stored:

- MAMLHV = f(SGLHV): these are relations or else tables that are defined experimentally and that supply a lower heating value obtainable as a maximum for a dry mixture of gases SG and GN, i.e., without steam ST, as a function of the heating value SGLHV, without causing undesirable phenomena in the combustion (humming, etc.);

- MAMWLHV = f(MAMLHV, FSGK, FNGK): these are relations or else tables that are defined experimentally and that supply a lower heating value obtainable as a maximum for a humid mixture of gases SG and GN, i.e., with steam ST, as a function of the heating value SGLHV, of the flowrate FSGK detected for the gas SG, and of the flowrate FNGK detected for the gas NG, without causing undesirable phenomena in the combustion.

The relations or experimental tables indicated above depend basically upon the pressures and temperatures of combustion, the geometry of the burner, and the composition of the syngas produced by the unit 6.

Furthermore, set by the operator or else stored in the system TG_GOVERNOR are:

- a minimum pressure pSGMIN (in particular, of 40 bar) for the pressure p_SG; and
- a maximum pressure pSGMX (in particular, of 41 bar) for the pressure p_SG.

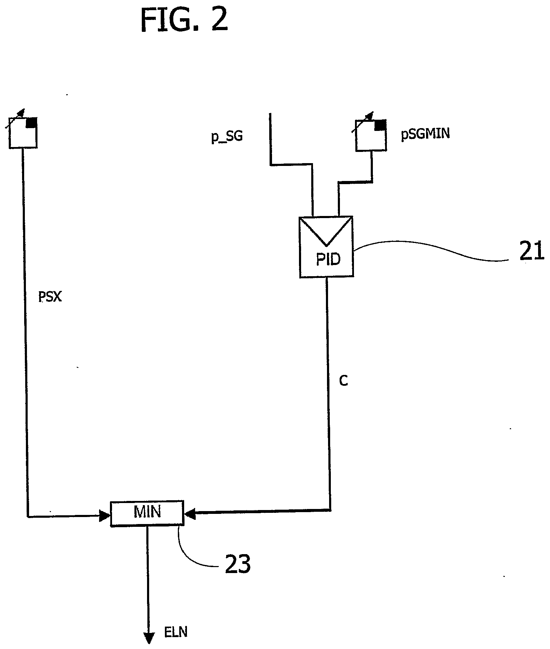

Also set is a load requirement, i.e., an electric power to be generated by the gas turbine. Said load requirement is designated by PSX in the diagram of Figure 2.

The pressure p_SG is taken as value indicating the available thermal load coming from the plant 5 so as not to require a quantity of gas SG higher than the one that can effectively be supplied by the plant 5 and so as to exploit to the maximum the quantity of gas SG available, in particular in the case where gas NG is added to supply effectively a power equal to the requirement PSX.

The requirement PSX is limited in the case where the pressure p_SG tends to drop below the minimum pressure pSGMIN. With reference to Figure 2, in fact, the requirement PSX is limited by an override regulator 21, constituted by a PID regulator, and set on the minimum pressure pSGMIN admissible for operation of the device 7 (40 bar). On the basis of the difference or error between the pressure p_SG detected and the minimum pressure pSGMIN, the regulator 21 issues a value of load C that is variable and that is compared with the requirement PSX.

Assumed as reference load ELN is the minimum value between the requirement PSX and the value of load C, calculated by the regulator 21 (block 23). The reference load ELN is the load setpoint, or target load, and is used throughout a series of known processing operations and regulations (corresponding, for example, to the loading ramps, the maximum temperature of the gas at output from the turbine, etc.). In other words, the system TG_GOVERNOR acts on the opening of the valve CV_SM so that the gas turbine effectively supplies a power equal to the reference load ELN.

By way of example, starting from a situation in which the gas turbine supplies the required load (i.e., ELN = PSX), if the amount of hydrogen extracted by the device 7 increases, the pressure p_SG decreases (in so far as the flowrate of gas SG coming from the device 7 decreases). If the pressure p_SG tends to drop beyond the value pSGMIN, the regulator 21 reduces the value of load C below the requirement PSX so that ELN = C. Since the reference load ELN has been reduced from PSX to C, the system ST_GOVERNOR reduces the opening of the valve CV_SM. Said reduction of opening tends to cause an increase in the pressure p_MX in the line 10, but the valve CV_SG is regulated automatically so as to maintain the pressure p_MX constant. Consequently, opening of the valve CV_SG is reduced down to a new condition of equilibrium, in which the pressure p_SG is equal to the value pSGMIN, with a power supplied equal to the value of load C (lower than the requirement PSX).

If the flowrate of hydrogen extracted from the device 7 decreases, the pressure p_SG rises so that the regulator 21 tends to increase the value of load C: the same increase occurs also for the reference load ELN if ELN = C (with C < PSX) so that the system ST_GOVERNOR increases the opening of the valve CV_SM to increase the flowrate of gas SG. Consequently, the pressure p_SG tends to drop when the pressure p_SG reaches the minimum pressure pSGMIN.

If, instead, the requirement PSX varies, the system TG_GOVERNOR varies the opening of the valve CV_SM as long as PSX < C, i.e., until the pressure p_SG reaches the minimum pressure pSGMIN. Once this is reached, a possible increase in the requirement PSX does not affect the regulation of the valve CV_SM.

In the case where the requirement PSX is higher than the reference load ELN and hence higher than the power effectively supplied by the gas turbine using just the gas SG, the operator has the possibility of issuing a manual command for enabling addition of a flow of gas NG in the mixer 11 to the flow of gas SG to supply a power that corresponds, or that approaches as much as possible, the requirement PSX.

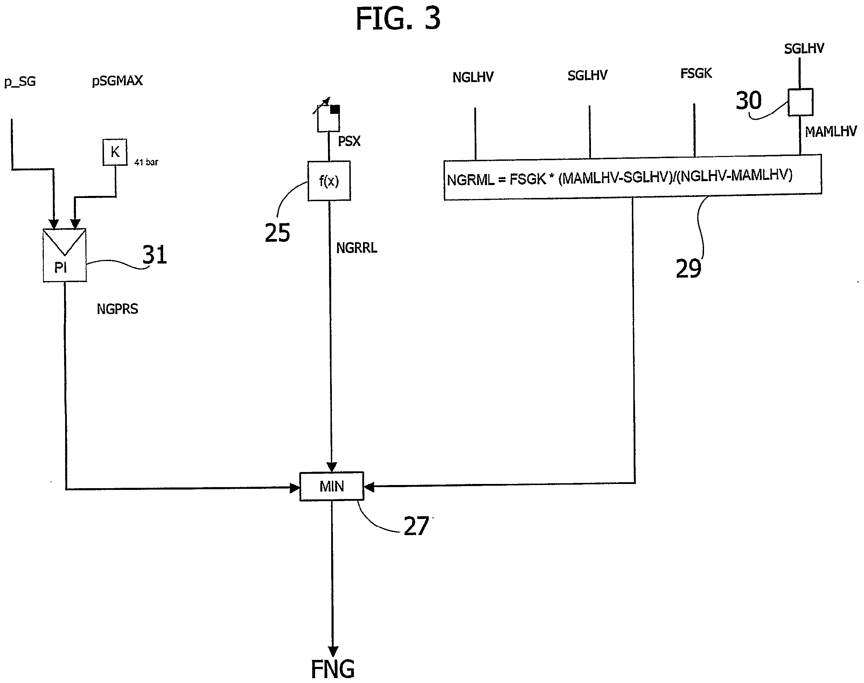

With reference to Figure 3, the system TG_GOVERNOR calculates the thermal input supplied by the gas SG that is sent to the burner 3 (defined by the product of the flowrate FSGK detected and the heating value SGLHV detected of the gas SG) and calculates a flowrate NGRRL of gas NG that should be added to the gas SG to make up for the difference in thermal input in order to reach the requirement PSX (block 25).

The flowrate NGRRL is limited by two calculated maximum values NGRML and NGRPS; i.e., the valve CV_NG is opened so as to provide a setpoint or requirement FNG of flowrate of gas NG equal to the minimum between NGRRL, NGRML and NGRPS (block 27).

The value NGRML is calculated in such a way as to cause the mixture of gases SG and NG to reach the heating value MAMLHV without any drawbacks in terms of combustion (block 29):

$$NGRML = FSGK * (MAMLHV - SGLHV) / (NGLHV - MAMLHV)$$

where

   MAMLHV is the maximum lower heating value admissible for the dry mixture of gases SG and NG, calculated on the basis of the relation or table stored as a function of the heating value SGLHV (block 30);
   FSGK is the flowrate of gas SG detected;
   SGLHV is the lower heating value detected for the gas SG;
   NGLHV is the lower heating value of the gas NG.

The value NGRPS is calculated, instead, by an override regulator 31, of the PI type, which limits the flowrate of gas NG if the pressure p_SG exceeds the maximum pressure pSGMAX (41 bar). The purpose of the regulator 31 is to prevent an excess flowrate of gas NG from causing an excessive increase of pressure in the line 10, a consequent reduction of opening of the valve CV_SG, and hence an excessive increase of the pressure p_SG upstream of the valve CV_SG (said increase in the pressure p_SG would cause discharge of part of the gas SG to the flare).

In particular, if the flowrate of gas NG added leads to an increase in the pressure p_SG beyond the maximum pressure p_SGMAX (41 bar), the regulator 31 intervenes to reduce the value NGRPS below the value NGRRL (and the value NGRML) and hence reduce the setpoint FNG. A reduction of the setpoint FNG leads to a reduction of the opening of the valve CV_NG and hence of flowrate of gas NG (running in steady-state conditions, in this case, will be with the pressure p_SG stable at 41 bar). By decreasing the setpoint FNG, substantially the entire flowrate of gas SG available is used, with a power supplied that approaches the requirement PSX as close as possible without this leading to any drawbacks in terms of combustion (requirement imposed by the value NGRML) and without this entailing any waste of gas SG (requirement imposed by the value NGRPS).

When the gases SG and GN are mixed with one another, both of the regulators 21 and 31 operate for regulating the flowrate of gas SG and of gas NG as a function of the pressure p_SG. In fact, by way of example, if the amount of hydrogen extracted from the device 7 increases, the flowrate of gas SG decreases so that the flowrate NGRRL and hence the setpoint FNG are increased up to the value NGRML. At this point, the value NGRML becomes the new setpoint FNG (block 29). If the flowrate of gas NG added is not sufficient to reach the requirement PSX, the regulator 21 intervenes to reduce the reference load ELN so that the opening of the valve CV_SM will be reduced and hence the pressure p_SG will not drop below the minimum pressure pSGMIN.

Once again by way of example, if the amount of hydrogen extracted by the device 7 decreases, the pressure p_SG tends to increase beyond the maximum pressure pSGMAX so that the regulator 31 intervenes to reduce the value NGRPS, which becomes the new setpoint FNG. Consequently, opening of the valve CV_NG and hence the flowrate of gas NG decrease, and the line 10 can receive a higher flowrate of gas SG. The increase in flowrate of gas SG causes a return of the pressure p_SG below the maximum pressure pSGMAX and hence leads to a new situation, in which the entire amount of gas SG produced is absorbed.

Once again by way of example, instead, if the requirement PSX drops, the flowrate NGRRL is decreased (block 25), until it reaches a zero value if the flowrate of gas SG is sufficient to reach the requirement PSX.

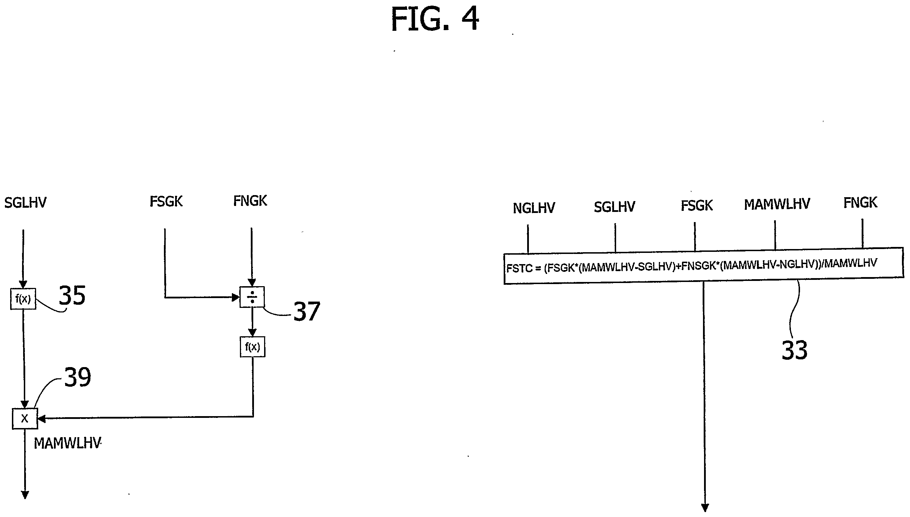

With reference to Figure 4, it is possible to add a flow of steam ST in the mixer 11. The system TG_GOVERNOR calculates the requirement or setpoint FSTC of flowrate of steam necessary for the humid mixture of gases SG and NG to have an admissible maximum heating value (block 33):

$$\mathrm{FSTC=(FSGK*(MAMWLHV-SGLHV)+FNGK*(MAMWLHV-NGLHV))/MAMWLHV}$$

where:

FNGK is the flowrate of gas NG detected;
MAMWLHV is the maximum lower heating value admissible for the humid mixture of gases SG and NG, calculated on the basis of the relations or tables stored as a function of the heating value SGLHV and of the ratio between the detected flowrates FSGK and FNGK; in particular, the system TG_GOVERNOR calculates a heating value as a linear function of SGLHV (block 35), computes the ratio between the detected flowrates FSGK and FNGK (block 37), and then corrects the preceding heating value as a linear function of the obtained ratio (block 39).

From the foregoing description it appears evident how the method implemented in the system TG_GOVERNOR will enable optimal regulation of the supply of fuel even when there are lacking signals indicating the thermal load that can be supplied by the gas SG available at output from the plant 5, in so far as the pressure p_SG is assumed as quantity indicating the load available.

Furthermore, it is possible to prevent drawbacks in operation of the plant 5 in so far as the regulation made maintains the pressure p_SG within optimal limits. In particular, the regulation satisfies the requirement pSGMIN<p_SG<pSGMAX, whilst the introduction of the gas with high calorific value (NG) is performed in order to modulate the thermal load entering the burner 3.

Mixing of the gases SG and NG and of the steam ST prior to their entry into the combustion chamber of the burner 3 then enables combustion to be kept under control in an optimal way.

Finally, it is clear that modifications and variations can be made to the method described and illustrated herein, without thereby departing from the sphere of protection of the present invention, as defined in the annexed claims.

**Claims**

1.    A method for controlling supply of fuel gas (SG, NG) to a burner (3) of a gas turbine; the method comprising the steps of:

   - sending a gas with low calorific value (SG) from a source (7) to said burner (3);
   - sending a gas with high calorific value (NG) to said burner (3) in addition to the gas with low calorific value (SG) in order to reach a required load (PSX); the gas with high calorific value (NG) being added to the gas with low calorific value (SG) before reaching said burner (3) ;
- detecting a delivery pressure (p_SG) of the gas with low calorific value (SG) coming from said source (7);
- regulating the flowrate of a fuel (SM) comprising the gas with low calorific value (SG) and sent to said burner (3) as a function of said delivery pressure (p_SG);

the flowrate (FNG) of gas with high calorific value (NG) being regulated as a function of said delivery pressure (p_SG); **characterized in that**:

- the flowrate of the fuel sent to said burner is regulated so as to maintain said delivery pressure (p_SG) above a minimum pressure (pSGMIN);
- steam is added to the mixture of the two gases;
- the flowrate of steam is regulated as a function of the detected heating value (SGLHV) of the gas with low calorific value (SG) coming from said source (7).

2. The method according to Claim 1, **characterized in that** the flowrate of the fuel sent to said burner (3) is regulated as a function of a reference load (ELN) equal to the minimum between the following values:

- a required value of load (PSX); and
- a variable value of load (C), calculated as a function of said delivery pressure (p_SG) to maintain said delivery pressure (p_SG) above said minimum pressure (pSGMIN).

3. The method according to Claim 2, **characterized in that** said variable value of load is calculated via a PID regulator.

4. The method according to Claim 1, **characterized in that** the flowrate (FNG) of gas with high calorific value (NG) is regulated so as to maintain said delivery pressure (p_SG) below a maximum pressure (pSGMAX).

5. The method according to Claim 4, **characterized in that** the flowrate of gas with high calorific value (NG) is equal to the minimum between the following values:

- a first value of flowrate (NGRRL), calculated so as to reach the required load (PSX);
- a second value of flowrate (NGRPS), calculated as a function of said delivery pressure (p_SG) so as to maintain said delivery pressure (p_SG) below said maximum pressure (pSGMAX); and
- a third value of flowrate (NGRML), calculated so as to reach a maximum heating value for the mixture of the two gases (MAMLHV).

6. The method according to Claim 5, **characterized in that** said second value of flowrate (NGRPS) is calculated via a PI regulator.

7. The method according to Claim 5 or Claim 6, **characterized in that** said third value of flowrate (NGRML) is calculated as a function of the heating value (SGLHV) of the gas with low calorific value (SG) coming from said source (7).

8. The method according to Claim 7, **characterized in that** said third value of flowrate (NGRML) is further calculated as a function of:

- the heating value (NGLHV) of the gas with high calorific value (SG);
- the detected flowrate (FSGK)of the gas with low calorific value (SG); and
- the maximum heating value for the dry mixture of the two gases (MAMLHV); said maximum heating value for the dry mixture of the two gases (MAMLHV) being calculated as a function of the detected heating value (SGLHV) of the gas with low calorific value (SG) coming from said source (7).

9. The method according to Claim 1, **characterized in that** the flowrate of steam is moreover regulated as a function of:

- the heating value (NGLHV) of the gas with high calorific value (NG);
- the detected flowrate (FSGK) of the gas with low calorific value (SG);
- the detected flowrate (FNGK) of the gas with high calorific value (NG);
- the maximum heating value for the humid mixture of the two gases (MAMWLHV); said maximum heating value for the humid mixture of the two gases (MAMWLHV) being calculated as a function of the heating value (SGLHV) of the gas with low calorific value (SG) detected coming from said source (7).

10. The method according to Claim 9, **characterized in that** said maximum heating value for the humid mixture of the two gases (MAMWLHV) is moreover calculated as a function of the ratio between the detected flowrate (FSGK) of the gas with low calorific value (SG) and the detected flowrate (FNGK) of the gas with high calorific value (NG).

11. A control unit (TG_GOVERNOR) configured so as to implement the method according to any one of the preceding claims.

**Patentansprüche**

1. Ein Verfahren zur Steuerung der Zufuhr von Brenngas (SG, NG) zu einem Brenner (3) einer Gasturbine; wobei das Verfahren folgende Schritte umfasst:

   - das Zuführen von Gas mit niedrigem Brennwert (SG) von einer Quelle (7) zum Brenner (3);
   - das Zuführen von Gas mit hohem Brennwert (NG) zum Brenner (3), zusätzlich zu dem Gas mit dem niedrigen Brennwert (SG), um eine benötigte Last (PSX) zu erlangen; wobei das Gas mit dem hohen Brennwert (NG) vor Erreichen des Brenners (3) zu dem Gas mit dem niedrigen Brennwert (SG) hinzugefügt wird;
   - das Detektieren eines Lieferdrucks (p_SG) des Gases mit niedrigem Brennwert (SG), welches von der Quelle (7) kommt;
   - das Regulieren der Strömungsrate eines Brennstoffs (SM), der das Gas mit niedrigem Brennwert (SG) beinhaltet und zum Brenner (3) geleitet wird, als eine Funktion des Lieferdrucks (p_SG);

   wobei die Strömungsrate (FNG) von Gas mit hohem Brennwert (NG) als eine Funktion des Lieferdrucks (p_SG) reguliert wird;
   **dadurch gekennzeichnet, dass**

   - die Strömungsrate des zum Brenner geleiteten Brennstoffs so reguliert wird, um den Lieferdruck (p_SG) über einem Mindestdruck (pSGMIN) zu halten;
   - zu der Mischung aus den beiden Gasen Dampf hinzu gefügt wird;
   - die Dampfströmungsrate als eine Funktion des detektierten Heizwertes (SGLHV) des Gases mit dem niedrigen Brennwert (SG), welches von der Quelle (7) kommt, reguliert wird.

2. Das Verfahren nach Anspruch 1, **dadurch gekennzeichnet, dass** die Strömungsrate des zum Brenner (3) geleiteten Brennstoffs als eine Funktion von einer Referenzlast (ELN) reguliert wird, welche dem Minimum aus den folgenden Werten entspricht:

   - einem erforderlichen Lastwert (PSX) und
   - einem variablen Lastwert (C), welcher als eine Funktion des Lieferdrucks (p_SG) kalkuliert wird, um den Lieferdruck (p_SG) oberhalb des Mindestdrucks (pSGMIN) zu halten.

3. Das Verfahren nach Anspruch 2, **dadurch gekennzeichnet, dass** der variable Lastwert mittels eines PID-Reglers kalkuliert wird.

4. Das Verfahren nach Anspruch 1, **dadurch gekennzeichnet, dass** die Strömungsrate (FNG) von Gas mit hohem Brennwert (NG) so reguliert wird, dass der Lieferdruck (p_SG) unter einem Höchstdruck (pSGMAX) gehalten wird.

5. Das Verfahren nach Anspruch 4, **dadurch gekennzeichnet, dass** die Strömungsrate des Gases mit hohem Brennwert (NG) dem Minimum aus den folgenden Werten entspricht:

   - einem ersten Strömungsratenwert (NGRRL), welcher so kalkuliert ist, dass eine erforderliche Last (PSX) erreicht wird;
   - einem zweiten Strömungsratenwert (NGRPS), welcher als eine Funktion des Lieferdrucks (p_SG) so kalkuliert ist, dass der Lieferdruck (p_SG) unter dem Höchstdruck (pSGMAX) gehalten wird; und
   - einem dritten Strömungsratenwert (NGRML), welcher so kalkuliert ist, dass ein maximaler Heizwert für die Mischung aus den beiden Gasen (MAMLHV) erreicht wird.

**6.** Das Verfahren nach Anspruch 5, **dadurch gekennzeichnet, dass** der zweite Strömungsratenwert (NGRPS) mittels eines PI-Reglers ermittelt wird.

**7.** Das Verfahren nach Anspruch 5 oder 6, **dadurch gekennzeichnet, dass** der dritte Strömungsratenwert (NGRML) als eine Funktion des Heizwertes (SGLHV) des Gases mit dem niedrigen Brennwert (SG) kalkuliert wird, welches von der Quelle (7) kommt.

**8.** Das Verfahren nach Anspruch 7, **dadurch gekennzeichnet, dass** der dritte Strömungsratenwert (NGRML) des Weiteren als eine Funktion von Folgendem kalkuliert ist:

- dem Heizwert (NGLHV) des Gases mit hohem Brennwert (NG);
- der detektierten Strömungsrate (FSGK) des Gases mit niedrigem Brennwert (SG); und
- dem maximalen Heizwert für die trockene Mischung aus den beiden Gasen (MAMLHV), wobei der maximale Heizwert für die trockene Mischung aus den beiden Gasen (MAMLHV) als eine Funktion des detektierten Heizwertes (SGLHV) des Gases mit dem niedrigen Brennwert (SG) kalkuliert wird, welches von der Quelle (7) kommt.

**9.** Das Verfahren nach Anspruch 1, **dadurch gekennzeichnet, dass** die Dampfströmungsrate darüber hinaus als eine Funktion von Folgendem reguliert wird:

- dem Heizwert (NGLHV) des Gases mit hohem Brennwert (NG);
- der detektierten Strömungsrate (FSGK) des Gases mit niedrigem Brennwert (SG);
- der detektierten Strömungsrate (FNGK) des Gases mit hohem Brennwert (NG); und
- dem maximalen Heizwert für die feuchte Mischung aus den beiden Gasen (MAMWLHV), wobei der maximale Heizwert für die feuchte Mischung aus den beiden Gasen (MAMWLHV) als eine Funktion des Heizwertes (SGLHV) des Gases mit dem niedrigen Brennwert (SG) kalkuliert wird, welches von der Quelle (7) kommt.

**10.** Das Verfahren nach Anspruch 9, **dadurch gekennzeichnet, dass** der maximale Heizwert für die feuchte Mischung aus den beiden Gasen (MAMWLHV) darüber hinaus als eine Funktion des Verhältnisses zwischen der detektierten Strömungsrate (FSGK) des Gases mit niedrigem Brennwert (SG) und der detektierten Strömungsrate (FNGK) des Gases mit hohem Brennwert (NG) kalkuliert wird.

**11.** Eine Regelungseinheit (TG_GOVERNOR), die so ausgebildet ist, dass sie das Verfahren nach einem der vorhergehenden Ansprüche anwendet.

**Revendications**

**1.** Procédé de commande d'alimentation d'un brûleur (3) d'une turbine à gaz en gaz combustible (SG, NG) ; le procédé comprenant les étapes de :

- envoi d'un gaz à faible pouvoir calorifique (SG) d'une source (7) audit brûleur (3) ;
- envoi d'un gaz à pouvoir calorifique élevé (NG) audit brûleur (3) en plus du gaz à faible pouvoir calorifique (SG) afin d'atteindre une charge requise (PSX) ; le gaz à pouvoir calorifique élevé (NG) étant ajouté au gaz à faible pouvoir calorifique (SG) avant d'atteindre ledit brûleur (3) ;
- détection d'une pression de refoulement (p_SG) du gaz à faible pouvoir calorifique (SG) provenant de ladite source (7) ;
- régulation du débit d'un combustible (SM) comprenant le gaz à faible pouvoir calorifique (SG) et envoyé audit brûleur (3) en fonction de ladite pression de refoulement (p_SG) ;

le débit (FNG) de gaz à pouvoir calorifique élevé (NG) étant régulé en fonction de ladite pression de refoulement (p_SG) ;
**caractérisé en ce que** :

- le débit du combustible envoyé audit brûleur est régulé de façon à maintenir ladite pression de refoulement (p_SG) au-dessus d'une pression minimale (pSGMIN) ;
- de la vapeur est ajoutée au mélange des deux gaz ;
- le débit de vapeur est régulé en fonction de la valeur thermique détectée (SGLHV) du gaz à faible pouvoir calorifique (SG) provenant de ladite source (7).

2. Procédé selon la revendication 1, **caractérisé en ce que** le débit du combustible envoyé audit brûleur (3) est régulé en fonction d'une charge de référence (ELN) égale au minimum entre les valeurs suivantes :

   - une valeur de charge requise (PSX) ; et
   - une valeur de charge variable (C), calculée en fonction de ladite pression de refoulement (p_SG) pour maintenir ladite pression de refoulement (p_SG) au-dessus de ladite pression minimale (pSGMIN).

3. Procédé selon la revendication 2, **caractérisé en ce que** ladite valeur de charge variable est calculée via un régulateur PID.

4. Procédé selon la revendication 1, **caractérisé en ce que** le débit (FNG) de gaz à pouvoir calorifique élevé (NG) est régulé de façon à maintenir ladite pression de refoulement (p_SG) en dessous d'une pression maximale (pSGMAX).

5. Procédé selon la revendication 4, **caractérisé en ce que** le débit de gaz à pouvoir calorifique élevé (NG) est égal au minimum entre les valeurs suivantes :

   - une première valeur de débit (NGRRL), calculée de façon à atteindre la charge requise (PSX) ;
   - une deuxième valeur de débit (NGRPS), calculée en fonction de ladite pression de refoulement (p_SG) de façon à maintenir ladite pression de refoulement (p_SG) en dessous de ladite pression maximale (pSGMAX) ; et
   - une troisième valeur de débit (NGRML), calculée de façon à atteindre une valeur thermique maximale pour le mélange des deux gaz (MAMLHV).

6. Procédé selon la revendication 5, **caractérisé en ce que** ladite deuxième valeur de débit (NGRPS) est calculée via un régulateur PI.

7. Procédé selon la revendication 5 ou la revendication 6, **caractérisé en ce que** ladite troisième valeur de débit (NGRML) est calculée en fonction de la valeur thermique (SGLHV) du gaz à faible pouvoir calorifique (SG) provenant de ladite source (7).

8. Procédé selon la revendication 7, **caractérisé en ce que** ladite troisième valeur de débit (NGRML) est en outre calculée en fonction :

   - de la valeur thermique (NGLHV) du gaz à pouvoir calorifique élevé (SG) ;
   - du débit détecté (FSGK) du gaz à faible pouvoir calorifique (SG) ; et
   - de la valeur thermique maximale pour le mélange sec des deux gaz (MAMLHV) ; ladite valeur thermique maximale pour le mélange sec des deux gaz (MAMLHV) étant calculée en fonction de la valeur thermique détectée (SGLHV) du gaz à faible pouvoir calorifique (SG) provenant de ladite source (7).

9. Procédé selon la revendication 1, **caractérisé en ce que** le débit de vapeur est de plus régulé en fonction :

   - de la valeur thermique (NGLHV) du gaz à pouvoir calorifique élevé (NG) ;
   - du débit détecté (FSGK) du gaz à faible pouvoir calorifique (SG) ;
   - du débit détecté (FNGK) du gaz à pouvoir calorifique élevé (NG) ;
   - de la valeur thermique maximale pour le mélange humide des deux gaz (MAMWLHV) ; ladite valeur thermique maximale pour le mélange humide des deux gaz (MAMWLHV) étant calculée en fonction de la valeur thermique (SGLHV) du gaz à faible pouvoir calorifique (SG) détecté provenant de ladite source (7).

10. Procédé selon la revendication 9, **caractérisé en ce que** ladite valeur thermique maximale pour le mélange humide des deux gaz (MAMWLHV) est de plus calculée en fonction du rapport entre le débit détecté (FSGK) du gaz à faible pouvoir calorifique (SG) et le débit détecté (FNGK) du gaz à pouvoir calorifique élevé (NG).

11. Unité de commande (TG_GOVERNOR) configurée de façon à mettre en oeuvre le procédé selon l'une quelconque des revendications précédentes.

FIG. 1

FIG. 2

EP 2 115 359 B1

p_SG

pSGMIN

PID

21

PSX

C

MIN

23

ELN

FIG. 3

# FIG. 4

SGLHV  FSGK  FNGK

$f(x)$  35

÷  37

$f(x)$

×  39

MAMWLHV

NGLHV  SGLHV  FSGK  MAMWLHV  FNGK

FSTC = (FSGK*(MAMWLHV-SGLHV)+FNSGK*(MAMWLHV-NGLHV))/MAMWLHV

33

**EP 2 115 359 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0055852 A
- JP 2006077698 B